(19) **Europäisches Patentamt**

**European Patent Office**

**Office européen des brevets**

(11) **EP 0 468 579 B1**

(12) **FASCICULE DE BREVET EUROPEEN**

(45) Date de publication et mention de la délivrance du brevet:
**09.10.1996 Bulletin 1996/41**

(51) Int. Cl.⁶: **B32B 27/30**, B32B 27/08, B65D 65/40

(21) Numéro de dépôt: **91201883.5**

(22) Date de dépôt: **17.07.1991**

(54) **Structures multicouches souples comprenant une couche en copolymère du chlorure de vinylidène liée à une couche en polymère plastifié du chlorure de vinyle et leur utilisation pour la fabrication d'emballages**

Mehrschichtige biegsame Strukturen mit einer Schicht aus Vinylidenchloridcopolymer, verbunden mit einer Schicht aus Weichpolyvinylchlorid und ihre Verwendung zur Herstellung von Packungen

Flexible multi-layer structures comprising a vinylidene chloride copolymer layer bonded to a layer of plastified polyvinyl chloride, and their use in making packages

(84) Etats contractants désignés:
**AT BE CH DE DK ES FR GB GR IT LI LU NL SE**

(30) Priorité: **27.07.1990 BE 9000748**

(43) Date de publication de la demande:
**29.01.1992 Bulletin 1992/05**

(73) Titulaire: **SOLVAY (Société Anonyme)**
**B-1050 Bruxelles (BE)**

(72) Inventeurs:
• **Dehennau, Claude**
**B-1410 Waterloo (BE)**
• **Dupont, Serge**
**B-1800 Vilvoorde (BE)**

(74) Mandataire: **Marckx, Frieda et al**
**Solvay S.A.**
**Département de la Propriété Industrielle**
**310, rue de Ransbeek**
**1120 Bruxelles (BE)**

(56) Documents cités:
**FR-A- 2 601 288**

• **WORLD PATENTS INDEX LATEST Accession No. 82-46866E Week 23 Derwent Publications Ltd., London GB & JP-A-57070140 (SAOTOME K) 30-04-82**
• **WORLD PATENTS INDEX Accession No. 71-10993S Week 23 Derwent Publications Ltd., London GB & JP-B-46004839 (NIPPON SYNTHETIC CHEM)**

## Description

La présente invention concerne des structures multicouches souples comprenant une couche en copolymère du chlorure de vinylidène liée à une couche en polymère plastifié du chlorure de vinyle et plus particulièrement de telles structures dans lesquelles les polymères précités sont liés à l'intervention d'un adhésif polymérique comprenant un polymère d'acétate de vinyle, ainsi que l'utilisation de ces structures pour la fabrication d'emballages.

Il est bien connu d'améliorer l'imperméabilité aux gaz et aux vapeurs d'emballages divers en polymères thermoplastiques de masse, tels que les polyoléfines et les polymères du chlorure de vinyle, en les associant à un copolymère du chlorure de vinylidène au sein d'une structure à couches polymériques multiples (structure multicouche). Les polymères plastifiés du chlorure de vinyle constituent des polymères de masse particulièrement appropriés pour la fabrication d'emballages souples et imperméables.

Dans la demande de brevet FR-A-86.10317 (SOLVAY & Cie), on décrit des structures multicouches souples coextrudées au sein desquelles un copolymère du chlorure de vinylidène est associé à un polymère plastifié du chlorure de vinyle à l'intervention d'un adhésif polymérique constitué d'un mélange d'un copolymère d'acétate de vinyle et d'éthylène (VAC-E) et d'un copolymère de chlorure de vinyle et d'acétate de vinyle (VC-VAC) dont le module élastique en cisaillement G' à 121°C et $10^{-4}$ cycles / seconde est supérieur à $0,5 . 10^3$ Pa. Les adhésifs en cause procurent une excellente résistance au délaminage à température ambiante, tant avant qu'après stérilisation à la vapeur d'eau à 121°C. Il s'est toutefois avéré que ces mélanges adhésifs présentent une stabilité thermique déficiente, ce qui se traduit par une coloration jaunâtre, voire la présence de points noirs dans les structures multicouches coextrudées lorsque les cycles de fabrication se prolongent pendant plusieurs heures. Cette stabilité thermique déficiente semble imputable essentiellement à la présence, au sein des mélanges adhésifs de l'art antérieur, de copolymères de chlorure et d'acétate de vinyle. Le recours aux seuls copolymères d'acétate de vinyle et d'éthylène pour lier une couche en copolymère du chlorure de vinylidène à une couche en polymère plastifié du chlorure de vinyle conduit à l'obtention de structures multicouches inutilisables en pratique par suite de l'apparition de plissements importants provenant d'un glissement des couches les unes sur les autres.

Dans la demande de brevet JP-A-57070140 (résumés WPIL Accesssion Number 82-46866 Derwent Pub. Ltd et PAJ/JPO) on décrit une composition thermoplastique composite élastomérique obtenue par mélange à l'état fondu en présence d'un peroxyde organique et à une température supérieure à la température de décomposition dudit peroxyde organique d'un copolymère d'éthylène et d'acétate de vinyle, d'au moins un polymère élastomérique tel qu'un copolymère élastomérique d'éthylène et d'une α-oléfine et d'un polymère de méthacrylate de méthyle. Ladite composition présente une bonne stabilité thermique et adhère au polychlorure de vinyle auquel elle peut par ailleurs être incorporée pour améliorer sa résistance aux chocs. Le document JP-A-57070140 ne concerne pas des structures multicouches et n'aborde pas le problème de l'adhérence entre une couche en copolymère du chlorure de vinylidène et une couche en polymère plastifié du chlorure de vinyle.

La présente invention vise à procurer des structures multicouches souples comprenant une couche en copolymère du chlorure de vinylidène liée à une couche en polymère plastifié du chlorure de vinyle à l'intervention d'un adhésif polymérique comprenant un polymère d'acétate de vinyle qui ne présentent pas les inconvénients précités des structures multicouches de l'art antérieur. Elle vise plus particulièrement à procurer des adhésifs polymériques à stabilité thermique améliorée assurant, par ailleurs, une excellente résistance au délaminage à température ambiante et à chaud, tant avant qu'après stérilisation à la vapeur d'eau à 121°C.

A cet effet, l'invention procure des structures multicouches souples comprenant une couche en copolymère du chlorure de vinylidène liée à une couche en polymère plastifié du chlorure de vinyle à l'intervention d'un adhésif polymérique comprenant un polymère d'acétate de vinyle, caractérisées en ce que l'adhésif polymérique est constitué d'un mélange de polymère d'acétate de vinyle contenant au moins 50 % en poids d'acétate de vinyle et de polyméthacrylate de méthyle dont le produit de la teneur pondérale en acétate de vinyle de l'adhésif polymérique, exprimée en pourcent, par sa viscosité dynamique à 100°C et 1 sec$^{-1}$, exprimée en kPa.s, est supérieur à $1,3 . 10^3$.

L'invention réside donc essentiellement dans le recours à un adhésif polymérique tel que défini ci-dessus pour lier et faire adhérer une couche en copolymère du chlorure de vinylidène à une couche en polymère plastifié du chlorure de vinyle au sein d'une structure multicouche souple comprenant au moins une couche en copolymère du chlorure de vinylidène liée à une couche en polymère plastifié du chlorure de vinyle.

L'utilisation des adhésifs polymériques selon l'invention permet la fabrication de structures multicouches transparentes, incolores et exemptes de points noirs et de plissements dont la résistance au pelage, avant et après stérilisation à la vapeur d'eau à 121°C, est généralement supérieure à 10 N/cm à température ambiante et à 2N/cm à 80°C.

Des résultats encore meilleurs sont obtenus lorsque le produit de la teneur pondérale de l'adhésif polymérique en acétate de vinyle, exprimée en pourcent, par sa viscosité dynamique à 100°C et 1 sec$^{-1}$, exprimée en kPa.s, est supérieur à $1,5 . 10^3$.

Un effet surprenant de la présente invention réside dans le fait que les mélanges d'adhésifs polymériques qui ne satisfont pas à la revendication, c'est-à-dire dont le produit du rapport pondéral en acétate de vinyle, exprimée en pourcent, par la viscosité dynamique à 100°C et 1 sec$^{-1}$, exprimée en kPa.s ([VAC] . [ $\eta$ ] ) est inférieur à 1,3 . 10$^3$, présentent une résistance au délaminage très largement inférieure aux valeurs précitées.

Par polymère d'acétate de vinyle, on entend désigner aux fins de la présente invention, l'homopolymère et les copolymères d'acétate de vinyle et d'éthylène contenant au moins 50 % en poids d'acétate de vinyle. Les meilleurs résultats sont obtenus avec les copolymères binaires d'acétate de vinyle et d'éthylène contenant de 60 à 90 % en poids d'acétate de vinyle et plus particulièrement encore avec ceux contenant de 70 à 85 % en poids d'acétate de vinyle auxquels on donne, par conséquent, la préférence.

Les polymères d'acétate de vinyle tels que définis ci-dessus sont des polymères plus ou moins collants et, de ce fait, difficiles à mettre en oeuvre et qui peuvent donner lieu à des phénomènes de "blocking". Afin de pallier cet inconvénient, il est avantageux d'utiliser un polymère d'acétate de vinyle enrobé d'un polymère thermoplastique. Suivant un mode de réalisation préféré de l'invention, on utilise donc un polymère d'acétate de vinyle enrobé d'un polymère thermoplastique constitué, de préférence, par du polychlorure de vinyle. Le polymère thermoplastique d'enrobage est généralement présent à raison d'environ 10 % en poids au maximum du polymère d'acétate de vinyle.

Les polymères d'acétate de vinyle, homopolymères et copolymères avec l'éthylène, ainsi que le polyméthacrylate de méthyle constituent des polymères bien connus en eux-mêmes. Ils peuvent être fabriqués par toutes les techniques classiques de polymérisation radicalaire des monomères éthyléniquement inaturés.

Les proportions relatives de polymère d'acétate de vinyle et de polyméthacrylate de méthyle peuvent varier dans une large mesure, pour autant bien entendu qu'il soit satisfait à la revendication (produit [VAC] . [$\eta$] > 1,3 . 10$^3$ ). L'addition de très faibles quantités de polyméthacrylate de méthyle, de l'ordre de quelques pourcents, procure déjà une amélioration significative de la stabilité thermique de l'adhésif polymérique par rapport aux adhésifs de l'art antérieur. L'incorporation de quantités croissantes de polyméthacrylate de méthyle améliore encore la stabilité thermique de l'adhésif sans altérer sa résistance au délaminage. Néanmoins, en raison du fait que le polyméthacrylate de méthyle a tendance à "rigidifier" la couche adhésive, les adhésifs polymériques selon l'invention ne contiennent généralement pas plus de 50 % en poids de polyméthacrylate de méthyle. De préférence, la quantité de polyméthacrylate de méthyle n'excède pas 25 % en poids. Les adhésifs polymériques selon l'invention contiennent donc, de préférence, au moins 75 % en poids de polymère d'acétate de vinyle, plus particulièrement de copolymère binaire d'acétate de vinyle et d'éthylène contenant de 60 à 90 % en poids d'acétate de vinyle, le solde étant constitué par du polyméthacrylate de méthyle.

Des adhésifs polymériques tout particulièrement préférés selon la présente invention sont constitués de 95 à 85 % en poids de copolymère binaire d'acétate de vinyle et d'éthylène contenant de 60 à 90 % en poids d'acétate de vinyle et de 5 à 15 % en poids de polyméthacrylate de méthyle.

Par polymère du chlorure de vinyle, on entend désigner ici les polymères contenant au moins 70 % en poids d'unités monomériques dérivées du chlorure de vinyle. Les polymères du chlorure de vinyle utilisables pour la réalisation des structures multicouches souples selon l'invention comprennent donc aussi bien les homopolymères du chlorure de vinyle que ses copolymères contenant des unités monomériques dérivées d'un ou de plusieurs comonomères et leurs mélanges. A titre d'exemples non limitatifs de pareils comonomères du chlorure de vinyle, on peut citer les oléfines telles que l'éthylène, le propylène et le styrène, les esters tels que l'acétate de vinyle et les acrylates et méthacrylates d'alkyles. On donne la préférence aux homopolymères du chlorure de vinyle.

Par polymère plastifié du chlorure de vinyle, on entend désigner ici les polymères du chlorure de vinyle tels que définis ci-dessus dont la dureté Shore A, mesurée selon la norme ASTM D 2240, ne dépasse pas 95 et, de préférence, 90. Habituellement la dureté Shore A est égale à 60 au moins. A titre d'exemples de pareils polymères plastifiés, on peut mentionner ceux contenant environ 35 à 75 parties en poids de plastifiant et, de préférence, au moins 40 parties en poids de plastifiant pour 100 parties en poids de polymère du chlorure de vinyle. Les plastifiants utilisables peuvent être choisis indifféremment parmi les plastifiants monomériques ou polymériques usuels des polymères du chlorure de vinyle. A titre d'exemples non limitatifs de pareils plastifiants, on peut mentionner les phtalates, les sébaçates, les adipates, les trimellitates, les pyromellitates, les citrates et les polyesters tels que la poly-$\varepsilon$-caprolactone et leurs mélanges.

On peut également faire appel à des polymères du chlorure de vinyle dits à plastification interne obtenus par copolymérisation du chlorure de vinyle avec des comonomères plastifiants, tels que par exemple l'acrylate d'éthylhexyle, ou encore par copolymérisation avec greffage sur des polymères dits "élastifiants" tels que la poly-$\varepsilon$-caprolactone.

Par copolymère du chlorure de vinylidène, on entend désigner ici les copolymères du chlorure de vinylidène contenant de 60 à 95 % en poids de chlorure de vinylidène, le solde étant constitué d'un ou de plusieurs comonomères à insaturation éthylénique, tels que, par exemple le chlorure de vinyle, les acides et les esters acryliques et méthacryliques, les nitriles acryliques et méthacryliques. On donne la préférence aux copolymères contenant environ 75 à 85 % en poids de chlorure de vinylidène.

Il est entendu que chacun des polymères constitutifs des structures à couches multiples selon l'invention peut comprendre les additifs usuels utilisés à la mise en oeuvre de ce polymère, tels que, par exemple, des lubrifiants, des plastifiants, des stabilisants thermiques, des stabilisants à la lumière, des charges, des pigments, etc.

Le mode d'obtention des structures multicouches selon l'invention n'est pas critique. On peut donc faire appel à toutes les techniques usuelles d'assemblage de couches polymériques pour réaliser les structures multicouches selon l'invention. A titre d'exemple de pareille technique, on peut citer le thermocollage à l'intervention d'une solution du mélange d'adhésifs dans un solvant ou un mélange de solvants appropriés. Des solvants convenant pour cette technique d'assemblage sont, par exemple, les hydrocarbures aromatiques, tels que le toluène, les hydrocarbures chlorés tels que le chlorure de méthylène, les cétones telles que l'acétone et la méthyléthylcétone, les éthers tels que le tétrahydrofuranne et les esters tels que l'acétate d'éthyle et leurs mélanges. On donne néanmoins la préférence au tétrahydrofuranne. En pratique, le thermocollage à l'intervention d'une solution de mélange d'adhésifs s'effectue par enduction à froid, par exemple à l'aide d'une racle, d'un film, d'une feuille ou d'une plaque en polymère plastifié du chlorure de vinyle au moyen d'une solution du mélange d'adhésifs, séchage de l'enduit et pressage à chaud du film, de la feuille ou de la plaque enduits (préencollés) sur un film ou une feuille en copolymère du chlorure de vinylidène. La température et la durée de thermocollage optimales seront évaluées par voie expérimentale dans chaque cas particulier. Elles dépendent, notamment, de l'épaisseur des couches polymériques assemblées et des additifs de mise en oeuvre éventuellement incorporés aux différents polymères.

D'autres techniques d'assemblage de couches polymériques usuelles et appropriées pour réaliser les structures multicouches selon l'invention sont celles dans lesquelles les polymères constitutifs sont mis en oeuvre à une température au moins égale à leur température de ramollissement, telles que le thermolaminage (pressage à chaud de couches polymériques préformées, par exemple, par extrusion), la coextrusion et la coextrusion-doublage.

Les structures multicouches selon l'invention comprennent au moins trois couches, à savoir, une couche en polymère plastifié du chlorure de vinyle (A) liée à une couche en copolymère du chlorure de vinylidène (C) à l'intervention d'un adhésif polymérique selon l'invention (B) (structures ABC). Elles peuvent également comprendre un nombre plus élevé de couches. C'est ainsi qu'on peut lier la face externe de la couche en copolymère du chlorure de vinylidène (C) à un polymère thermoplastique autre que le polychlorure de vinyle (E) tel que, par exemple, une polyoléfine, un copolymère d'éthylène et d'acétate de vinyle, un polyester ou un polyamide, à l'intervention d'une couche adhésive appropriée (D) (structures asymétriques ABCDE). On donne néanmoins la préférence aux structures symétriques à cinq couches constituées d'une couche centrale en copolymère du chlorure de vinylidène (C) liée, de part et d'autre, à une couche en polymère plastifié du chlorure de vinyle (A) à l'intervention d'un adhésif polymérique selon l'invention (B) (structures ABCBA). Pour la réalisation de tels complexes dans lesquels la couche en copolymère du chlorure de vinylidène constitue une couche interne, on peut faire appel à n'importe laquelle des techniques d'assemblage décrites ci-dessus. Par contre, pour la réalisation de structures à trois couches dans lesquelles le copolymère du chlorure de vinylidène constitue une couche externe on préfère les techniques d'assemblage telles que le thermocollage et le thermolaminage.

L'épaisseur des couches polymériques constitutives des structures multicouches selon l'invention et l'épaisseur totale desdites structures n'est pas critique et dépend bien entendu de l'usage auquel on les destine et du niveau d'imperméabilité recherché. Pour fixer les idées, l'épaisseur totale des structures multicouches souples selon l'invention est comprise en général entre 130 et 3500 microns et, de préférence, entre 180 et 2000 microns. L'épaisseur de la couche en copolymère du chlorure de vinylidène est comprise, en général, entre 10 et 850 microns et, de préférence, entre 20 et 500 microns et celle des couches intermédiaires assurant l'adhérence entre 1 et 100 microns et, de préférence, entre 2 et 50 microns. Les structures multicouches selon l'invention peuvent donc se présenter sous forme de films, de feuilles, de berlingots et de poches souples. Elles peuvent être utilisées avantageusement pour la fabrication d'emballages pour produits alimentaires, pharmaceutiques et cosmétologiques. Les structures multicouches souples symétriques à cinq couches polymériques conviennent tout particulièrement pour la fabrication de berlingots et de poches stérilisables pour l'emballage de liquides nutritionnels ou physiologiques et, en particulier, de poches à sang, à soluté ou à dialyse.

Les exemples qui suivent sont destinés à illustrer l'invention.

Les exemples 1 à 3, selon l'invention, et les exemples 4 à 6, de comparaison, concernent tous des structures multicouches obtenues par thermocollage d'un film en copolymère du chlorure de vinylidène et de chlorure de vinyle contenant 22 % en poids de chlorure de vinyle, d'une épaisseur de 70 $\mu$m, sur une feuille en polychlorure de vinyle souple d'une épaisseur de 1,5 mm obtenue par mise en oeuvre d'une composition comprenant pour 100 parties en poids de polychlorure de vinyle 68 parties de phtalate de diisodécyle.

Dans les exemples 1 à 3, le polymère d'acétate de vinyle utilisé est un copolymère binaire d'acétate de vinyle et d'éthylène contenant 82 % en poids d'acétate de vinyle et présentant un indice de fluidité (MI) de 1,65 à 170°C sous une charge de 10 kg. Dans les exemples 4 à 6, de comparaison, il s'agit d'un copolymère binaire d'acétate de vinyle et d'éthylène à 68 % en poids d'acétate de vinyle présentant un indice de fluidité de 89 dans les mêmes conditions. Dans tous les exemples, le polyméthacrylate de méthyle utilisé présente un indice de fluidité de 35 mesuré à 210°C sous une charge de 10 kg.

La composition des adhésifs polymériques utilisés dans les exemples 1 à 6, en particulier le rapport pondéral du copolymère d'acétate de vinyle au polyméthacrylate de méthyle (PVAC/PMMA), la teneur pondérale en acétate de vinyle [VAC] et la viscosité dynamique à 100°C et 1 sec$^{-1}$ [$\eta$], ainsi que le produit [VAC] . [$\eta$] figurent au tableau I en annexe.

La viscosité dynamique des adhésifs polymériques est évaluée sur un rhéomètre qui permet de mesurer les propriétés mécaniques et dynamiques des polymères de l'état vitreux ou cristallin à l'état fondu. Les mesures s'effectuent sur des pastilles de 1 à 2 mm d'épaisseur et de 25 mm de diamètre prelevées dans des échantillons préparés à partir de solutions à 20 % en poids des adhésifs polymériques dans le tétrahydrofuranne. Après évaporation du tétrahydrofuranne pendant 48 heures à température ambiante, le résidu polymérique est chauffé pendant 2 minutes à 100°C et ensuite pressé pendant 2 minutes à 100°C sous une pression de 80 bars. L'échantillon pressé est ensuite refroidi sous une pression de 80 bars jusqu'à la température ambiante, après quoi il est découpé en pastilles.

La mesure consiste à déterminer sous une fréquence $\nu$ de 0,16 cycle par seconde, c'est-à-dire pour un gradient de vitesse de 1 sec$^{-1}$ et à une température de 100°C, les modules G' et G". La viscosité dynamique à 100°C et 1 sec$^{-1}$, se calcule par la formule suivante :

$$\eta = \frac{\sqrt{G'^2 + G''^2}}{2\,\pi\,\upsilon}$$

Avec une racle à fil de 200 $\mu$m, on enduit un film en copolymère du chlorure de vinylidène d'une solution d'adhésif polymérique à 20 % en poids dans le tétrahydrofuranne, on sèche l'enduit dans un four conditionné à 80°C pendant 3 minutes. L'épaisseur de l'enduit sec s'élève à 30 $\mu$m. Le film préencollé en copolymère du chlorure de vinylidène est pressé à chaud sur une couche en polychlorure de vinyle souple pendant 1,30 minute et sous une pression de 30 bars dans une presse maintenue à 140°C, puis le complexe est transféré dans une presse froide et y est maintenu à température ambiante pendant 8 minutes sous la même pression.

Dans le tableau II en annexe sont repris les résultats de l'évaluation de l'adhérence, mesurée par le biais de la résistance au pelage, des structures multicouches selon les exemples 1 à 6. La résistance au pelage est mesurée sur un dynamomètre FRANK type 650 suivant une méthode inspirée de la norme ASTM D 1876-72. Avant la mesure, les échantillons sont conditionnés dans une salle isotherme à 23°C pendant 24 heures (adhérence à 23°C), respectivement dans une étuve ventilée à 80°C pendant 20 minutes (adhérence à 80°C). L'adhérence est également évaluée, après conditionnement thermique à 23°C et à 80°C dans les conditions précitées, sur d'autres échantillons découpés dans les mêmes multicouches ayant subi préalablement une stérilisation en autoclave à la vapeur d'eau à 121°C pendant 30 minutes.

La comparaison des résultats des exemples selon l'invention avec ceux des exemples de comparaison montre la supériorité appréciable des adhésifs polymériques selon la présente invention sur le plan de l'adhérence à température ambiante et à 80°C, tant avant qu'après stérilisation, sur des adhésifs polymériques de même composition mais qui ne répondent pas à la revendication (produit [VAC . $\eta$] < 1,3 . 10$^3$).

Dans le tableau III en annexe figurent les résultats de l'évaluation de la stabilité thermique dynamique des adhésifs polymériques selon les exemples 1 et 3, ainsi que de deux adhésifs polymériques selon l'art antérieur conformes aux adhésifs selon les exemples 1 et 3 si ce n'est que le polyméthacrylate de méthyle y a été remplacé par 10 parties (exemple 7, de comparaison), respectivement par 50 parties (exemple 8, de comparaison) de copolymère de chlorure de vinyle et d'acétate de vinyle à 10 % en poids d'acétate de vinyle possédant un nombre K égal à 60.

La stabilité thermique dynamique a été évaluée sur un malaxeur interne à doubles cames contra-rotatives tournant à 50 t/min dont le pétrin est porté progressivement, à raison de 4°C/min, de 90 à 230°C. Après la fusion de la matière, au cours de laquelle le couple exercé sur les cames croît avec l'élévation de la température, le couple commence par décroître au fur et à mesure de la montée en température. Le moment où la variation du couple en fonction de la température atteinte par la matière se modifie constitue le début de la dégradation thermique. Dans le tableau III en annexe figurent le temps écoulé depuis le début de la mise en chauffe jusqu'au début de dégradation thermique, ainsi que la température atteinte par la matière à cet instant.

La comparaison des résultats de l'évaluation de la stabilité thermique dynamique des adhésifs selon l'invention (exemples 1 et 3) avec ceux des adhésifs selon l'art antérieur (exemples 7 et 8) indique à suffisance le gain en stabilité thermique que procurent les adhésifs selon la présente invention.

TABLEAU I

| N° de l'exemple | Composition de l'adhésif polymérique | | | |
|---|---|---|---|---|
| | Proportion pondérale PVAC/PMMA | [VAC], % en poids | $\eta$, kPa.s | [VAC] . $\eta$ |
| 1 | 90/10 | 74 | 25 | 1850 |
| 2 | 75/25 | 61,5 | 29 | 1783 |
| 3 | 50/50 | 41 | 40 | 1640 |
| exemple comparatif 4 | 90/10 | 61 | 9,5 | 580 |
| exemple comparatif 5 | 75/25 | 51 | 10,5 | 536 |
| exemple comparatif 6 | 50/50 | 34 | 18 | 612 |

TABLEAU II

| N° de l'exemple | Résistance au pelage (adhérence), Newton/cm avant/après stérilisation | | | |
|---|---|---|---|---|
| | à 23°C | | à 80°C | |
| 1 | 20,7 | >30* | 3 | 2,33 |
| 2 | 11,1 | >30* | 2,7 | 3,2 |
| 3 | 10,40 | 15,3 | 2,3 | 2,3 |
| exemple comparatif 4 | 4 | 4,61 | 0,18 | 0,21 |
| exemple comparatif 5 | 4,85 | 4,52 | 0,19 | 0,21 |
| exemple comparatif 6 | 4,19 | 3,54 | 0,21 | 0,22 |

\* rupture du film en copolymère du chlorure de vinylidène

TABLEAU III

| N° de l'exemple | Stabilité thermique dynamique (début de dégradation) | |
|---|---|---|
| | Temps écoulé, min. | Température matière,°C |
| 1 | 38,5 | 215 |
| 3 | 39,5 | 218 |
| exemple comparatif 7 | 24 | 190 |
| exemple comparatif 8 | 14 | 190 |

**Revendications**

1. Structures multicouches souples comprenant une couche en copolymère du chlorure de vinylidène liée à une couche en polymère plastifié du chlorure de vinyle à l'intervention d'un adhésif polymérique comprenant un polymère d'acétate de vinyle, caractérisées en ce que l'adhésif polymérique est constitué d'un mélange de polymère d'acétate de vinyle contenant au moins 50 % en poids d'acétate de vinyle et de polyméthacrylate de méthyle et en ce que le produit de la teneur pondérale en acétate de vinyle de l'adhésif polymérique, exprimée en pourcent, par sa viscosité dynamique à 100°C et 1 sec$^{-1}$, exprimée en kPa.s, est supérieur à 1,3 . 10$^3$.

2. Structures multicouches souples suivant la revendication 1, caractérisées en ce que le produit de la teneur pondérale en acétate de vinyle de l'adhésif polymérique, exprimée en pourcent, par sa viscosité dynamique à 100°C et 1 sec$^{-1}$, exprimée en kPa.s, est supérieur à 1,5 . 10$^3$.

3. Structures multicouches souples suivant la revendication 1, caractérisées en ce que le polymère d'acétate de vinyle est un copolymère binaire d'acétate de vinyle et d'éthylène contenant de 60 à 90 % en poids d'acétate de vinyle.

4. Structures multicouches souples suivant la revendication 1, caractérisées en ce que l'adhésif polymérique contient du polyméthacrylate de méthyle en une quantité n'excédant pas 50 % en poids.

5. Structures multicouches souples selon la revendication 4, caractérisées en ce que l'adhésif polymérique contient du polyméthacrylate de méthyle en une quantité n'excédant pas 25 % en poids.

6. Structures multicouches souples suivant l'une quelconque des revendications 1 à 5, caractérisées en ce que l'adhésif polymérique est constitué de 95 à 85 % en poids de copolymère binaire d'acétate de vinyle et d'éthylène contenant de 60 à 90 % en poids d'acétate de vinyle et de 5 à 15 % en poids de polyméthacrylate de méthyle.

7. Structures multicouches souples suivant l'une quelconque des revendications 1 à 6, caractérisées en ce qu'elles contiennent trois couches constituées d'une couche de polymère plastifié du chlorure de vinyle liée à une couche en copolymère du chlorure de vinylidène à l'intervention d'une couche adhésive polymérique constituée d'un mélange de polymère d'acétate de vinyle et d'éthylène et de polyméthacrylate de méthyle.

8. Structures multicouches souples suivant l'une quelconque des revendications 1 à 6, caractérisées en ce qu'elles contiennent cinq couches constituées d'une couche centrale en copolymère du chlorure de vinylidène liée, de part et d'autre, à une couche en polymère plastifié du chlorure de vinyle à l'intervention d'une couche adhésive polymérique constituée d'un mélange de copolymère d'acétate de vinyle et d'éthylène et de polyméthacrylate de méthyle.

9. Utilisation des structures multicouches souples suivant l'une quelconque des revendications 1 à 8 pour la fabrication d'emballages souples pour produits alimentaires, pharmaceutiques et cosmétologiques.

10. Utilisation des structures multicouches souples suivant la revendication 8 pour la fabrication de poches et de berlingots stérilisables destinés à l'emballage de liquides nutritionnels ou physiologiques.

## Claims

1. Flexible multilayer structures comprising a layer of vinylidene chloride copolymer bonded to a layer of plasticised vinyl chloride polymer with the aid of a polymeric adhesive comprising a vinyl acetate polymer, characterised in that the polymeric adhesive consists of a mixture of vinyl acetate polymer containing at least 50 % by weight of vinyl acetate and of polymethyl methacrylate and in that the product of the vinyl acetate weight content of the polymeric adhesive, expressed in per cent, multiplied by its dynamic viscosity at 100°C and 1 s$^{-1}$, expressed in kPa.s, is greater than 1.3x 10$^3$.

2. Flexible multilayer structures according to Claim 1, characterised in that the product of the vinyl acetate weight content of the polymeric adhesive, expressed in per cent, multiplied by its dynamic viscosity at 100°C and 1 s$^{-1}$, expressed in kPa.s, is greater than 1.5×10$^3$.

3. Flexible multilayer structures according to Claim 1, characterised in that the vinyl acetate polymer is a binary copolymer of vinyl acetate and ethylene, containing from 60 to 90% by weight of vinyl acetate.

4. Flexible multilayer structures according to Claim 1, characterised in that the polymeric adhesive contains polymethyl methacrylate in a quantity not exceeding 50% by weight.

5. Flexible multilayer structures according to claim 4, characterised in that the polymeric adhesive contains polymethyl methacrylate in a quantity not exceeding 25% by weight.

6. Flexible multilayer structures according to any one of Claims 1 to 5, characterised in that the polymeric adhesive consists of 95 to 85% by weight of a binary copolymer of vinyl acetate and ethylene, containing from 60 to 90% by weight of vinyl acetate, and of 5 to 15% by weight of polymethyl methacrylate.

7. Flexible multilayer structures according to any one of Claims 1 to 6, characterised in that they contain three layers consisting of a layer of plasticised vinyl chloride polymer bonded to a layer of vinylidene chloride copolymer with the aid of a polymeric adhesive layer consisting of a mixture of a polymer of vinyl acetate and ethylene and of polymethyl methacrylate.

8. Flexible multilayer structures according to any one of Claims 1 to 6, characterised in that they contain five layers consisting of a middle layer of vinylidene chloride copolymer bonded on both sides to a layer of plasticised vinyl chloride polymer with the aid of a polymeric adhesive layer consisting of a mixture of a copolymer of vinyl acetate and ethylene and of polymethyl methacrylate.

9. Use of the flexible multilayer structures according to any one of Claims 1 to 8 for the manufacture of flexible packaging for foodstuff, pharmaceutical and cosmetic products.

10. Use of the flexible multilayer structures according to Claim 8 for the manufacture of sterilisable pouches and cartons intended for packaging nutritional or physiological liquids.

**Patentansprüche**

1. Mehrschichtige biegsame Strukturen mit einer Schicht aus Vinylidenchloridcopolymer, die unter Vermittlung eines Haftpolymers, das ein Polyvinylacetat umfaßt, mit einer Schicht aus Weichpolyvinylchlorid verbunden ist, dadurch gekennzeichnet, daß das Haftpolymer aus einem Gemisch von Polyvinylacetat, das wenigstens 50 Gew.-% Vinylacetat enthält, und Polymethylmethacrylat besteht, und dadurch, daß das Produkt des auf das Gewicht bezogenen Gehalts an Vinylacetat des Haftpolymers, ausgedrückt in Prozent, mal seiner dynamischen Viskosität bei 100 °C und 1 s$^{-1}$, ausgedrückt in kPa · s, größer als 1,3 · 10$^3$ ist.

2. Mehrschichtige biegsame Strukturen gemäß Anspruch 1, dadurch gekennzeichnet, daß das Produkt des auf das Gewicht bezogenen Gehalts an Vinylacetat des Haftpolymers, ausgedrückt in Prozent, mal seiner dynamischen Viskosität bei 100 °C und 1 s$^{-1}$, ausgedrückt in kPa · s, größer als 1,5 · 10$^3$ ist.

3. Mehrschichtige biegsame Strukturen gemäß Anspruch 1, dadurch gekennzeichnet, daß das Polyvinylacetat ein binäres Vinylacetat-Ethylen-Copolymer ist, das 60 bis 90 Gew.-% Vinylacetat enthält.

4. Mehrschichtige biegsame Strukturen gemäß Anspruch 1, dadurch gekennzeichnet, daß das Haftpolymer Polymethylmethacrylat in einer Menge enthält, die 50 Gew.-% nicht überschreitet.

5. Mehrschichtige biegsame Strukturen gemäß Anspruch 4, dadurch gekennzeichnet, daß das Haftpolymer Polymethylmethacrylat in einer Menge enthält, die 25 Gew.-% nicht überschreitet.

6. Mehrschichtige biegsame Strukturen gemäß einem der Ansprüche 1 bis 5, dadurch gekennzeichnet, daß das Haftpolymer aus 95 bis 85 Gew.-% binärem Vinylacetat-Ethylen-Copolymer, das 60 bis 90 Gew.-% Vinylacetat enthält, und aus 5 bis 15 Gew.-% Polymethylmethacrylat besteht.

7. Mehrschichtige biegsame Strukturen gemäß einem der Ansprüche 1 bis 6, dadurch gekennzeichnet, daß sie drei Schichten enthalten, die aus einer Schicht Weichpolyvinylchlorid, die unter Vermittlung einer Polymerhaftschicht, die aus einem Gemisch von Vinylacetat-Ethylen-Polymer und Polymethylmethacrylat besteht, mit einer Schicht aus Vinylidenchloridcopolymer verbunden ist, bestehen.

8. Mehrschichtige biegsame Strukturen gemäß einem der Ansprüche 1 bis 6, dadurch gekennzeichnet, daß sie fünf Schichten enthalten, die aus einer zentralen Schicht aus Vinylidenchloridcopolymer, die auf beiden Seiten unter Vermittlung einer Polymerhaftschicht, die aus einem Gemisch von Vinylacetat-Ethylen-Copolymer und Polymethylmethacrylat besteht, mit einer Schicht aus Weichpolyvinylchlorid verbunden ist, bestehen.

9. Verwendung der mehrschichtigen biegsamen Strukturen gemäß einem der Ansprüche 1 bis 8 zur Herstellung von biegsamen Verpackungen für Nahrungsmittel, pharmazeutische und kosmetische Produkte.

10. Verwendung der mehrschichtigen biegsamen Strukturen gemäß Anspruch 8 zur Herstellung von sterilisierbaren Beuteln und Tüten, die zur Verpackung von flüssigen Lebensmitteln oder physiologischen Flüssigkeiten bestimmt sind.